# EUROPÄISCHE PATENTSCHRIFT

(11) **EP 3 230 152 B1**
(45) Veröffentlichungstag und Bekanntmachung des Hinweises auf die Patenterteilung: **06.03.2019**
(21) Anmeldenummer: 15812993.2
(22) Anmeldetag: 08.12.2015
(51) Int. Cl.: B62D 5/24

(54) **VERFAHREN ZUR VERBESSERUNG DES LENKGEFÜHLS BEI EINER KUGELUMLAUFLENKUNG**
METHOD FOR IMPROVING THE STEERING FEEL IN THE CASE OF A RECIRCULATING BALL STEERING SYSTEM
PROCÉDÉ POUR AMÉLIORER LA MANIABILITÉ DANS UNE DIRECTION À RECIRCULATION DE BILLES

(30) Priorität: 12.12.2014 DE 102014118567
(43) Veröffentlichungstag der Anmeldung: 18.10.2017
(73) Patentinhaber: Tedrive Steering Systems GmbH, 42489 Wülfrath (DE)
(72) Erfinder: MÜLLER, Jens-Hauke, 42553 Velbert-Neviges (DE); SCHULTE, Olaf, 40883 Ratingen (DE); KIRSCHBAUM, Sven, 40822 Mettmann (DE)
(74) Vertreter: Patentanwälte Bauer Vorberg Kayser
(86) Internationale Anmeldenummer: PCT/EP2015/078953
(87) Internationale Veröffentlichungsnummer: WO 2016/091866

(56) Entgegenhaltungen:
- DE-A1- 10 058 275
- US-A1- 2006 175 119

## Beschreibung

Die vorliegende Erfindung zeigt ein Verfahren zur Verbesserung des Lenkgefühls einer Kugelumlauflenkung, insbesondere zur Kompensation eines Stick-Slip-Effekts.

Bei einer Kugelumlauflenkung ist ein Lenkkolben zwischen einer ersten Arbeitskammer und einer zweiten Arbeitskammer in einem Lenkgehäuse gelagert, wobei der Lenkkolben einen Verzahnungsbereich an seiner Lenkkolbenaußenwand aufweist, in den Zähne einer Segmentwelle eingreifen. Die Arbeitskammern sind zur Lenkunterstützung über Druckmittelleitungen mit einem Steuerventil verbunden und der Lenkkolben ist entlang einer Längsachse axial verschiebbar. Über das Steuerventil werden die Arbeitskammern bedarfsweise mit dem Druckmittel gefüllt oder geleert, sodass der Lenkkolben in seiner Bewegung in beide Richtungen unterstützt werden kann. Die Lenkbewegung des Fahrers wird üblicherweise mit Hilfe eines Lenkrads eingeleitet, denkbar sind aber auch alternative Systeme, beispielsweise ein Joy Stick.

Kugelumlauflenkungen sind Teile des Lenkgetriebes, das die Drehbewegung eines Lenkrads je nach Bauart entweder direkt oder indirekt über Gestänge auf Spurstangen überträgt. Eine Kugelumlauflenkung ist eine Art Spindellenkung, bei der die Kraft zwischen Spindel und Mutter von Kugeln übertragen wird, die in den Gewindegängen umlaufen.

Derartige Lenkgetriebe sind seit langem bekannt und in vielfachen Ausführungen erhältlich. Beispielsweise beschreiben die Dokumente DE 100 58 275 A1, DE 34 14 891 A1 und DE 199 11 891 A1 solche Kugelumlauflenkungen.

Kugelumlauflenkungen werden u.a. in leichten und schweren Nutzfahrzeugen eingesetzt. Es hat sich gezeigt, dass bekannte Kugelumlauflenkungen einen ungewollten sogenannten Stick-Slip-Effekt aufweisen, welcher sich negativ auf das Lenkgefühl auswirkt. Der Fahrer hat das Gefühl, er muss zunächst einen Widerstand überwinden, bevor die Lenkbewegung gleichmäßig und mit konstantem Kraftaufwand möglich ist. Hinzu kommt ein damit verbundener erhöhter Verschleiß.
Bekannt ist, dass das Steuerventil mit einer Prozessoreinheit verbunden sein kann, über die Ventile des Steuerventils betätigbar sind. Die Prozessoreinheit ist wiederum mit einem Sensor verbunden, der eine Drehung der Lenksäule bzw. das aufgebrachte Drehmoment durch den Fahrer ermittelt. Solche Sensoren und Prozessoreinheiten werden beispielsweise im Zusammenhang mit Fahrassistenzsystemen oder mit Einparkhilfen genutzt.

Das Dokument US 2006/175119 A1, das als nächstliegender Stand der Technik angesehen wird, offenbart ein Verfahren gemäß dem Oberbegriff des Anspruchs 1. Die Aufgabe der Erfindung besteht darin, die oben genannten Nachteile des Standes der Technik zu vermeiden. Insbesondere soll ein Verfahren zur Verbesserung des Lenkgefühls bei einer Kugelumlauflenkung bereitgestellt werden. Mit dem Verfahren soll es möglich sein, den Stick-Slip-Effekt zur reduzieren. Das Lenkgefühl soll angenehm und gleichmäßig sein. Dabei soll die Kugelumlauflenkung trotzdem kostengünstig herstellbar sein.
Erfindungsgemäß wird die Aufgabe durch Verfahren nach dem unabhängigen Verfahrensanspruch gelöst.
Das Verfahren bewirkt, dass dann, wenn eine ermittelte Lenkwinkelgeschwindigkeit des Lenkungsstrangs in eine erste Richtung größer Null und daran anschließend nahezu oder gleich Null ist, die Ventile eines Steuerventils, durch eine Prozessoreinheit, die mit einem Sensor verbunden ist, derart geöffnet werden, dass der Druck in einer der Bewegungsrichtung eines Lenkkolbens abgewandten Arbeitskammer des Lenkkolbens reduziert und unmittelbar anschließend der Druck in der gleichen Arbeitskammer wieder erhöht wird.
Die beim Lenken entstehende Lenkkraft aus dem Fahrwerk wird über einen Lenkstockhebel und die Segmentwelle auf den Lenkkolben rückgekoppelt. Dieser Effekt ergibt sich daraus, dass zwischen dem Lenkkolben und der Segmentwelle Separationskräfte entstehen, die aus der Verzahnung resultieren und die diese beiden Komponenten auseinanderdrücken. Der Lenkkolben wird auf seiner der Verzahnung gegenüberliegenden Seite gegen die Lenkgehäuseinnenwand gedrückt. Obwohl sich Druckmittel, üblicherweise Hydrauliköl, in der Lenkkolbenkammer befindet, kann dieses aufgrund der quasi statischen Bewegung nicht als

Ölfilm zur Reibreduzierung wirken. Folglich entsteht eine große Reibung zwischen der Lenkgehäuseinnenwand und der Lenkkolbenaußenwand, was zum genannten Stick-Slip-Effekt, aber auch zum Verschleiß der Bauteile und damit zu einer weiteren Erhöhung der Reibung führt.

Die Erfinderin hat erkannt, dass die Unstetigkeit im Lenkgefühl unter anderem auch dadurch hervorgerufen wird, dass der Systemdruck über das Entspannen eines T-Bars im Steuerventil unter das eigentlich in der aktuellen Lenksituation benötigte Kraftniveau gesenkt wird, um den Lenkkolben aus der Haftreibung zu bewegen. Dies führt dazu, dass der T-Bar für diese Lenksituation zu weit entspannt ist, wodurch sich eine Momentenerhöhung im Lenkgefühl ergibt, kurz nachdem der Lenkkolben in die Gleitreibung übergegangen ist, um den Systemdruck wieder anzuheben.

Beim Zurücklenken fällt also der Druck in einer der beiden Arbeitskammern so weit, dass sich der Lenkkolben eigentlich bewegen müsste. Aufgrund der Haftung zwischen der Lenkgehäuseinnenwand und der Lenkkolbenaußenwand bewegt sich der Lenkkolben jedoch zunächst nicht, um sich dann relativ schnell zu bewegen. Der Lenkkolben fällt sozusagen plötzlich und muss dann durch eine Erhöhung des Arbeitsmitteldrucks wieder gefangen werden. Dieser Vorgang ist am Lenkrad spürbar und wird als störend empfunden.

Diese Problematik entsteht insbesondere dann, wenn das Lenkrad und damit die Räder vollständig in eine Richtung eingeschlagen werden und anschließend ein Zurücklenken erfolgt. Die Lenkung bzw. der Lenkstrang wird in dieser Situation mit einer bestimmten Lenkwinkelgeschwindigkeit gedreht, die beim Anschlag auf 0 reduziert wird. In dieser Situation bleibt der Lenkkolben sozusagen hängen. Durch das Zurücklenken erhöht sich die Lenkwinkelgeschwindigkeit wieder. Anders ausgedrückt hat die Lenkwinkelgeschwindigkeit zunächst einen positiven Wert in die erste Richtung, ist danach 0 und hat anschließend bei Zurücklenken in die entgegengesetzte zweite Richtung einen negativen Wert.

Die Erfindung macht sich die Tatsache zunutze, dass eine Ermittlung eines Signals, dass den Wechsel der Lenkrichtung anzeigt, zum Beispiel die Lenkwinkelgeschwindigkeit oder auch das Lenkmoment über einen Sensor nahezu in Echtzeit möglich ist. Diese Information kann erfindungsgemäß dazu genutzt werden, die zeitliche Verzögerung der Bewegung des Lenkkolben, also den Stick-Slip-Effekt zu kompensieren. Aufgrund der Informationen des Sensors bezüglich der Lenkwinkelgeschwindigkeit wird der Systemdruck so vorzeitig gesenkt, dass der Lenkkolben losbricht, ohne dass ein zu weites Entspannen des T-Bars geschieht. In einem zweiten Schritt wird das schlagartige Losbrechen des Lenkkolbens über einen entgegen gerichteten Druckpuls sofort wieder gedämpft.

Es sind auch Systeme bekannt, bei welchen direkt auf der Kugelumlauflenkung oder in der Lenksäule ein zusätzlicher Motor angeordnet ist (CEPS), über welchen Überlagerungsmomente auf das Lenkrad gebracht werden können. Auch über dieses System ist es möglich den beschriebenen Stick-Slip -Effekt zu kompensieren.

Im Folgenden wird die Erfindung exemplarisch unter Nutzung des Lenkwinkelgeschwindigkeitssignals erläutert, welches aber nur stellvertretend für die andern Möglichkeiten beschreiben wird. Wesentlich ist, dass dann, wenn eine Drehbewegung der Lenksäule in eine erste Richtung erfolgt und daran anschließend die Drehbewegung in diese Richtung nahezu oder vollständig stoppt, die Kompensationsmaßnahme eingeleitet wird.

Über eine Prozessoreinheit wird das vom Sensor kommende Lenkwinkelgeschwindigkeit Signal verarbeitet. Zunächst wird erkannt, dass die Lenkwinkelgeschwindigkeit größer 0 ist, bis sie beim Anschlag oder auch Stoppen vor dem Lenkanschlag des Lenkrads auf 0 zurückfällt. Es folgt das Signal bzw. Information, dass beim Zurücklenken in die entgegengesetzte Richtung die Lenkwinkelgeschwindigkeit wieder zunimmt. Diese Information wird unmittelbar genutzt, indem ein entsprechendes Ventil des Steuerventils bzw. der Ventilhülse übermäßig weit geöffnet wird, insbesondere weiter, als dies der Fahrer durch seine Lenkbewegung eigentlich bewirkt hätte. Dadurch wird der Druck in der entsprechenden Arbeitskammer sofort und entsprechend schnell gesenkt, so dass der Lenkkolben losbrechen kann. Die Prozesseinheit bewirkt in einem nächsten Schritt, dass das Steuerventil derart bewegt bzw. eingestellt wird, dass der Druck in der entsprechenden Arbeitskammer unmittelbar und schnell ansteigt, um eine zu große Bewegung des Lenkkolbens zu verhindern.

Erfindungsgemäß kann vorgesehen sein, dass die Kompensationsmaßnahmen nur dann eingeleitet werden, wenn die Zeitdauer, in der die Lenkwinkelgeschwindigkeit nahezu oder etwa 0 ist, mindestens 20 ms andauert. Dadurch soll vermieden werden, dass die beschriebenen Maßnahmen auch dann ergriffen werden, wenn sich noch kein Stick-Slipeffekt eingestellt hat.

In einer alternativen Ausführungsvariante der Erfindung bewirkt die Prozesseinheit, dass bereits beim Anschlag des Lenkkolbens, also beim Endanschlag des Lenkrads, der Druck in der entsprechenden Arbeitskammer abgebaut wird. Dadurch bricht der Lenkkolben beim Zurücklenken schneller los, als dies beim üblichen Stick-Slip-Effekt der Fall wäre. Als auslösendes Signal wird hierfür also bereits die Reduzierung der Lenkwinkelgeschwindigkeit auf 0 genutzt, es wird nicht abgewartet, bis die Lenkwinkelgeschwindigkeit in die entgegengesetzte Richtung wieder zunimmt. Der Druck in der entsprechenden Arbeitskammer wird dabei soweit reduziert, dass der Lenkkolben kaum noch gehalten wird. Wird das Lenkrad dann entgegengesetzte Richtung bewegt, löst sich der Lenkkolben sofort.

Zur Steuerung des Kompensationsverfahrens werden bevorzugt Signale eines Sensors genutzt, der die Lenkwinkelgeschwindigkeit misst. Ein solcher Sensor kann zusätzlich zu einem Drehmomentensensor im Verlauf der Lenksäule angeordnet sein, vorzugsweise auf einer Eingangswelle des Steuerventils. Es handelt sich oftmals um einen kombinierten Lenk/Momenten Sensor, für weitere typische iHSA-Funktionen wie CityMode benutzt wird. Erfindungsgemäß kann aber auch eine Kombination aus Drehmomentensensor und Lenkwinkelgeschwindigkeitssensor verwendet werden. Alternativ oder zusätzlich kann aber beispielsweise auch vorgesehen sein, dass ein Sensor den Endanschlag des Lenkkolbens ermittelt und dieses Signal an die Prozesseinheit weitergibt. Auf Basis dieses Signals kann dann der Druck in der für den Rückweg des Lenkkolbens relevanten Arbeitskammer bereits gesenkt werden.

Erfindungsgemäß kann vorgesehen sein, dass dann, wenn der Druck in der der Bewegungsrichtung des Lenkkolbens abgewandten Arbeitskammer des Lenkkolbens reduziert wird, der Druck in der anderen Arbeitskammer gleichzeitig erhöht wird, und anschließend in dieser Arbeitskammer dann reduziert wird, wenn der Druck in der der Bewegungsrichtung des Lenkkolbens abgewandten Arbeitskammer des Lenkkolbens wieder erhöht wird. Im Prinzip wird das ordnungsgemäße Kompensationsverfahren dann über beide Arbeitskammern gleichzeitig gesteuert.

Die Erfindung wird anhand der nachfolgenden Figuren näher erläutert. Es zeigen:
- Fig. 1:: eine vereinfachte Prinzipdarstellung einer Kugelumlauflenkung,
- Fig. 2:: ein Blockdiagram zur Verdeutlichung des Verfahrens,
- Fig. 3:: eine grafische Darstellung der Druck-und Winkelverhältnisse im Lenksystem, ohne erfindungsgemäße Kompensation,
- Fig. 4:: eine grafische Darstellung der Druck-und Winkelverhältnisse im Lenksystem, mit erfindungsgemäßer Kompensation,

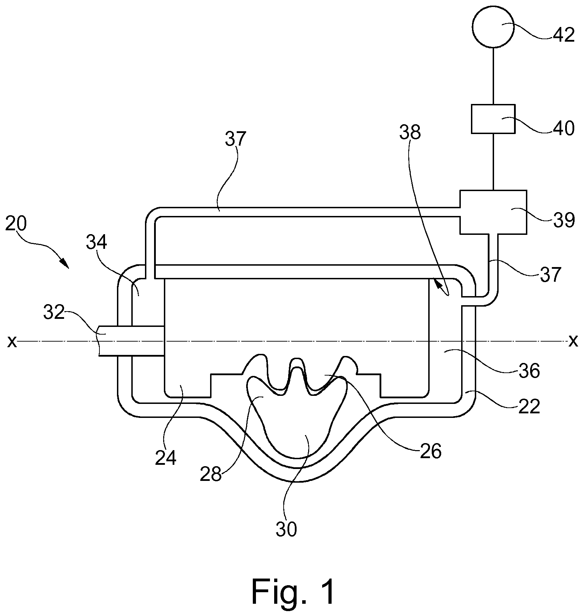

Eine erfindungsgemäße Kugelumlauflenkung 20 ist in stark vereinfachter Darstellung in Figur 1 im Querschnitt gezeigt. Diese Prinzipdarstellung ist nur beispielhaft zu verstehen, keinesfalls soll die Erfindung auf die gezeigten Figuren beschränkt sein. Um die Erfindung besser verdeutlichen zu können, stellen die Figuren die Bauteile nicht maßstabsgetreu da. Neben vielreichen nicht gezeigten Bauteilen weist sie ein Lenkgehäuse 22 auf, in dem ein Lenkkolben 24 entlang einer Längsachse X-X bewegbar ist.

Eine erfindungsgemäße Kugelumlauflenkung 20 ist in stark vereinfachter Darstellung in Figur 1 im Querschnitt gezeigt. Neben vielreichen nicht gezeigten Bauteilen weist sie ein Lenkgehäuse 22 auf, in dem ein Lenkkolben 24 entlang einer Längsachse X-X bewegbar ist.

Der Lenkkolben 24 weist einen Verzahnungsbereich 26 auf, in den Zähne 28 einer Segmentwelle 30 eingreifen. Eine Längsverschiebung des Lenkkolbens 24 entlang der Längsachse X-X bewirkt ein Verdrehen der Segmentwelle 30, die gleichzeitig eine Abtriebswelle darstellt und den Lenkwinkel des Fahrzeugs verstellt.

Die Längsverschiebung des Lenkkolbens 24 durch den Fahrer wird über eine Antriebswelle 32 bewirkt, die mit einem nicht dargestellten Lenkgeber, beispielsweise einem Lenkrad oder einem Joystick verbunden ist. Die Kugelumlauflenkung 20 verstärkt die aus der Betätigung des Lenkgebers resultierende Drehbewegung der Antriebswelle 32.

Der Lenkkolben 24 unterteilt den Innenraum des Lenkgehäuses 22 in eine erste Arbeitskammer 34 und eine zweite Arbeitskammer 36. Die Arbeitskammern 34, 36 sind über Anschlüsse und Druckmittelleitungen 37 mit einem Steuerventil 39 verbunden. Über dieses Steuerventil wird ein Druckmittel, üblicherweise Hydrauliköl, in die Arbeitsräume 34, 36 gepumpt, um die Bewegung des Lenkkolbens 24 zu unterstützen.

Im Inneren des Lenkkolbens 24 ist eine nicht gezeigte Lenkspindel angeordnet, die mit der Antriebswelle 32 verbunden ist. Die Lenkspindel ist im Lenkgehäuse zwar drehbar, jedoch axial unverschiebbar gelagert. Die Lenkspindel weist einen Kugelumlauf auf, über den der Lenkkolben 24 entlang der Längsachse X-X verschiebbar ist.

Wie bereits erläutert, entstehen beim Lenken Separationskräfte zwischen der Segmentwelle 30 und dem Lenkkolben 24 im Bereich des Verzahnungsbereichs 26, welche diese beiden Komponenten auseinanderdrücken. Hierdurch wird der Lenkkolben 24 auf der dem Verzahnungsbereich 26 radial gegenüberliegenden Seite gegen eine Lenkgehäuseinnenwand 38 gedrückt, wodurch der ungewollte Stick-Slip-Effekt und der damit verbundene erhöhte Verschleiß entsteht.

Das Steuerventil 39 weist eine über einen externen Antrieb angetriebene Einheit auf, über die entsprechende Ventile für das Druckmittel von außen, also unabhängig von der Lenkbewegung des Fahrers, geöffnet und geschlossen werden können. Eine solche Einheit kann beispielsweise eine Ventilhülse darstellen.

Der externe Antrieb des Steuerventils 39 ist erfindungsgemäß mit einer Prozessoreinheit 40 verbunden. Über die Prozesseinheit 40 und den externen Antrieb kann somit das Steuerventil 39 bewegt werden.

Die Prozesseinheit 39 ist wiederum mit einem Sensor 42 verbunden und berücksichtigt von diesem kommende Signale und Informationen zur Steuerung des Steuerventils 39.

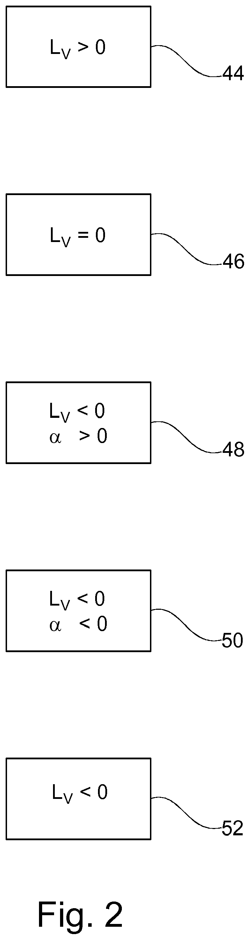

Figur 2 verdeutlicht den Ablauf des erfindungsgemäßen Verfahrens in einem Blockdiagramm.

Zunächst erfolgt in einem ersten Verfahrensschritt 44 ein Einlenken des Lenkrads. Die vom Sensor 42 gemeldete Lenkwinkelgeschwindigkeit Lv ist dabei größer 0. Die Lenkwinkelgeschwindigkeit (Lv) kann, wie bereits ausgeführt, unmittelbar ermittelt werden, alternativ ist es aber auch möglich, über die Lenkwinkelgeschwindigkeit (Lv) aus dem Lenkmomentsignal abzuleiten. Ein Signal, dass den Richtungswechsel der Drehrichtung anzeigt kann also zum Beispiel über den Lenkwinkel, das Lenkmoment oder von beiden Signalen gebildet werden.

Es kommt zum Endanschlag/Stoppen des Lenkrads und des Lenkkolbens 24 (zweiter Verfahrensschritt 46). Dementsprechend sinkt die Lenkwinkelgeschwindigkeit Lv auf 0, der Lenkkolben 24 bewegt sich nicht mehr.

Es folgt in einem dritten Verfahrensschritt 48 der Beginn des Zurücklenkens. Die Lenkwinkelgeschwindigkeit Lv nimmt in entgegengesetzter Richtung wieder zu, dargestellt durch LV < 0. An dieser Stelle greift die Prozessoreinheit 40 ein und öffnet ein Ventil, wodurch beispielsweise in Arbeitskammer 34 der Druck schnell abfällt, sodass der Lenkkolben 24 möglichst schnell freigegeben wird und sich bewegen kann. Da sich die Erfindung besonders für eine Verwendung mit einer externen antreibbaren Ventilhülse eignet, die durch ihre Verdrehung Ventilöffnungen freigibt, ist in Figur 2 mit α ein Ventilöffnungswinkel bezeichnet. Da die Prozessoreinheit 40 die Ventilhülse aktiv verdreht, ist der Ventilöffnungswinkel α größer 0.

Der vierte Verfahrensschritt 50 beschreibt den Zustand, in dem der Lenkkolben 24 gerade losgebrochen ist, sich also bewegt. Die Lenkwinkelgeschwindigkeit Lv ist weiterhin kleiner 0. Die Prozesseinheit 40 beeinflusst das Steuerventil 39 bzw. die Ventilhülse derart, dass in Arbeitskammer 34 der Druck möglichst schnell wieder aufgebaut wird, um einen Gegenimpuls zu erzeugen und den Lenkkolben 24 zu bremsen. Die Ventilhülse dreht sich entsprechend und der Ventilöffnungswinkel α ist kleiner 0.

Im fünften und letzten Verfahrensschritt 52 erfolgt das weitere Zurücklenken in die Ausgangsposition, die Lenkwinkelgeschwindigkeit Lv ist dementsprechend weiterhin kleiner 0. Während dieses Verfahrensschritts ist kein Eingreifen durch die Prozesseinheit 40 nötig, der Ventilöffnungswinkel ist somit 0.

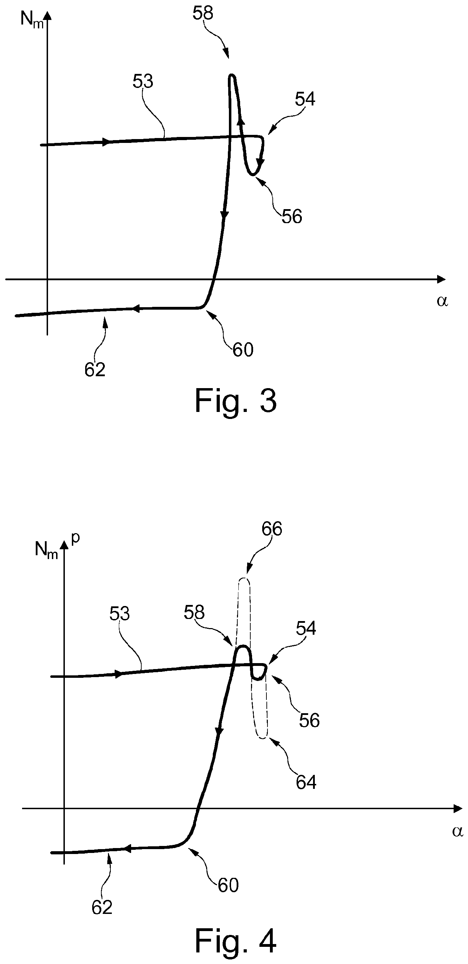

Die Figuren 3 und 4 verdeutlichen den Effekt des erfindungsgemäßen Verfahrens, wobei Figur 3 die Zustände ohne die erfindungsgemäßen Kompensation und Figur 4 die Zustände mit erfindungsgemäßer Kompensation verdeutlichen.

Auf der x-Achse ist der Lenkwinkel α und auf der y-Achse die auf das Lenkrad durch den Fahrer aufzubringende Kraft in N aufgetragen. Der Vorgang beginnt mit dem Einlenken 53 bis zum Anschlag 54. Es folgt das Zurücklenken, wobei der T-Bar entspannt und der Druck abfällt. Die durch den Fahrer aufzubringende Kraft am Lenkrad fällt ebenfalls deutlich ab, da der Lenkkolben 24 aufgrund des Stick-Slip-Effekts zunächst Kleben bleibt und anschließend plötzlich losbricht (Punkt 56). Es folgt ein Anstieg der notwendigen Kraft bedingt durch den entspannten T-Bar und den geringen Systemdruck (Punkt 58). Erst danach fällt der notwendige Kraftaufwand weiter ab (Punkt 60) und ein bezogen auf den Kraftaufwand lineares Zurücklenken erfolgt (Punkt 62).

Figur 4 zeigt den Einfluss des erfindungsgemäßen Verfahrens, mit dem der ungewollte Unter- bzw. Übersteuerungseffekt (Punkte 56 und 58) reduziert werden kann. Neben dem notwendigen Kraftaufwand ist auf der y-Achse in Figur 4 weiterhin der Druck in der entsprechenden Arbeitskammer 34, 36 in gestrichelten Linien aufgetragen. Deutlich erkennbar ist, dass unmittelbar nach Erreichen des Anschlags auf 54 bzw. mit Beginn des Zurücklenkens eine deutliche Druckabsenkung in der Arbeitskammer 34, 36 erfolgt (Punkt 64). Unmittelbar daran anschließend wird der Druck in der Arbeitskammer 34, 36 wieder erhöht (Punkt 66). Dementsprechend werden die für den Fahrer spürbaren Lenkmomentausschläge (Punkte 56, 58) deutlich reduziert.

Die Erfindung ist nicht auf die beschriebenen Ausführungsbeispiele beschränkt, diese dienen lediglich der Erläuterung des Grundgedankens der Erfindung.

## Patentansprüche

1. Verfahren zur Kompensation eines Stick-Slip-Effekts bei einer Kugelumlauflenkung (20) mit einem Lenkgehäuse (22), in dem ein Lenkkolben (24) zwischen einer ersten Arbeitskammer (34) und einer zweiten Arbeitskammer (36) gelagert ist, wobei
- der Lenkkolben (24) einen Verzahnungsbereich (26) an seiner Lenkkolbenaußenwand aufweist, in den Zähne (28) einer Segmentwelle (30) eingreifen,
- der Lenkkolben (24) entlang einer Längsachse X-X verschiebbar ist,
- die Arbeitskammern (34, 36) zur Lenkunterstützung über Druckmittelleitungen mit einem Steuerventil (39) verbunden sind,
- das Steuerventil (39) mit einer Prozessoreinheit (40) verbunden ist, über die Ventile des Steuerventils (39) betätigbar sind, und
- die Prozessoreinheit (40) mit einem Sensor (42) verbunden ist, der eine Drehung der Lenksäule sowohl in eine erste Drehrichtung, als auch in eine zweite, entgegengesetzte Drehrichtung ermittelt,
**dadurch gekennzeichnet, dass**
dann, wenn eine Drehbewegung der Lenksäule in eine erste Richtung erfolgt und daran anschließend die Drehbewegung in diese Richtung nahezu oder vollständig stoppt, die Ventile des Steuerventils (39) durch die Prozessoreinheit (40) derart geöffnet werden, dass der Druck in der der Bewegungsrichtung des Lenkkolbens (24) abgewandten Arbeitskammer (34, 36) des Lenkkolbens (24) reduziert und unmittelbar anschließend der Druck in der gleichen Arbeitskammer (34, 36) wieder erhöht wird.

2. Verfahren nach Anspruch 1, **dadurch gekennzeichnet, dass dann,** wenn eine Lenkwinkelgeschwindigkeit (Lv) in eine erste Richtung größer Null und daran anschließend nahezu oder gleich Null ist, die Ventile des Steuerventils (39) durch die Prozessoreinheit (40) derart geöffnet werden, dass der Druck in der der Bewegungsrichtung des Lenkkolbens (24) abgewandten Arbeitskammer (34, 36) des Lenkkolbens (24) reduziert und unmittelbar anschließend der Druck in der gleichen Arbeitskammer (34, 36) wieder erhöht wird.

3. Verfahren nach Anspruch 1 oder Anspruch 2, **dadurch gekennzeichnet, dass** dann, wenn der Druck in der der Bewegungsrichtung des Lenkkolbens (24) abgewandten Arbeitskammer (34, 36) des Lenkkolbens (24) reduziert, der Druck in der anderen Arbeitskammer (34, 36) gleichzeitig erhöht wird, und anschließend in dieser Arbeitskammer (34, 36) dann reduziert wird, wenn der Druck in der der Bewegungsrichtung des Lenkkolbens (24) abgewandten Arbeitskammer (34, 36) des Lenkkolbens (24) wieder erhöht wird.

4. Verfahren nach Anspruch 1 oder Anspruch 2, **dadurch gekennzeichnet, dass** der Druck in der der Bewegungsrichtung des Lenkkolbens (24) abgewandten Arbeitskammer (34, 36) des Lenkkolbens (24) reduziert und unmittelbar anschließend der Druck in der gleichen Arbeitskammer (34, 36) wieder erhöht wird, wenn die Zeitdauer des Zustands, in dem Lenkwinkelgeschwindigkeit (Lv) nahezu oder gleich Null ist, länger als 20 ms andauert.

5. Verfahren nach einem der Ansprüche 1 bis 3, **dadurch gekennzeichnet, dass der** Sensor (42) einen Endanschlag des Lenkkolbens (24) erkennt, und daraufhin ein entsprechendes Signal ausgibt, dass die Lenkwinkelgeschwindigkeit (Lv) nahezu oder gleich Null ist.

## Claims

1. A method for compensating a stick-slip effect in the case of a recirculating ball steering system (20) comprising a steering housing (22), in which a steering piston (24) is supported between a first working chamber (34) and a second working chamber (36), wherein
- the steering piston (24) has a toothed region (26) on its steering piston outer wall, with which teeth (28) of a segment shaft (30) engage,
- the steering piston (24) can be moved along a longitudinal axis X-X,
- the working chambers (34, 36) are connected to a control valve (39) by means of pressure medium lines in order to provide steering assistance,
- the control valve (39) is connected to a processor unit (40), by means of which the valves of the control valve (39) can be actuated, and
- the processor unit (40) is connected to a sensor (42), which determines a rotation of the steering column both in a first direction of rotation and in a second, opposite direction of rotation,
**characterized in that**
when a rotational motion of the steering column in a first direction occurs and thereafter the rotational motion in said direction nearly or completely stops, the valves of the control valve (39) are opened by the processor unit (40) in such a way that the pressure in the working chamber (34, 36) of the steering piston (24) facing away from the direction of motion of the steering piston (24) is reduced and immediately thereafter the pressure in the same working chamber (34, 36) increases again.

2. The method according to claim 1, **characterized in that**, when a steering angle speed (Lv) in a first direction is greater than zero and is nearly or equal to zero thereafter, the valves of the control valve (39) are opened in such a way by means of the processor unit (40) that the pressure in a working chamber (34, 36) of the steering piston (24) facing away from the direction of motion of the steering piston (24) is reduced and immediately thereafter the pressure in the same working chamber (34, 36) is increased again.

3. The method according to claim 1 or claim 2, **characterized in that**, when the pressure is reduced in the working chamber (34, 36) of the steering piston (24) facing away from the direction of motion of the steering piston (24), the pressure in the other working chamber (34, 36) is increased simultaneously and is subsequently reduced in this working chamber (34, 36), when the pressure in the working chamber (34, 36) of the steering piston (24) facing away from the direction of motion of the steering piston (24), is increased again.

4. The method according to claim 1 or claim 2, **characterized in that** the pressure in the working chamber (34, 36) of the steering piston (24) facing away from the direction of motion of the steering piston (24) is reduced and immediately thereafter the pressure in the same working chamber (34, 36) is increased again, when the time period of the state, in which the steering angle speed (Lv) is nearly or approximately 0, lasts more than 20 ms.

5. The method according to one of claims 1 to 3, **characterized in that** the sensor (42) identifies an end stop of the steering piston (24) and thereupon emits a corresponding signal that the steering angle speed (Lv) is nearly or equal zero.

## Revendications

1. Procédé de compensation d'un phénomène de stick-slip dans une direction à recirculation de billes (20) comprenant un boîtier de direction (22) à l'intérieur duquel un piston de direction (24) est logé entre une première chambre de travail (34) et une deuxième chambre de travail (36), dans lequel
- le piston de direction (24) présente une zone à denture (26) sur sa paroi extérieure de piston de direction, dans laquelle s'engrènent des dents (28) d'un arbre de secteur de direction (30),
- le piston de direction (24) est déplaçable suivant un axe longitudinal X-X,
- les chambres de travail (34, 36) sont reliées à une soupape de commande (39) via des conduites de fluide sous pression, pour une assistance à la direction,
- la soupape de commande (39) est reliée à une unité de processeur (40) par l'intermédiaire de laquelle des vannes de la soupape de commande (39) peuvent être actionnées, et
- l'unité de processeur (40) est reliée à un capteur (42) qui détecte une rotation de la colonne de direction aussi bien dans un premier sens de rotation que dans un deuxième sens de rotation opposé,
**caractérisé par le fait que**
lorsqu'un mouvement de rotation de la colonne de direction se produit dans un premier sens et que, ensuite, le mouvement de rotation dans ce sens s'arrête presque ou complètement, les vannes de la soupape de commande (39) sont ouvertes par l'unité de processeur (40) de telle sorte que la pression dans la chambre de travail (34, 36) du piston de direction (24), qui est opposée au sens de mouvement du piston de direction (24), est réduite et que, immédiatement après, la pression dans la même chambre de travail (34, 36) est à nouveau augmentée.

2. Procédé selon la revendication 1, **caractérisé par le fait que** lorsqu'une vitesse angulaire de direction (Lv) dans un premier sens est supérieure à zéro et est ensuite à peu près ou égale à zéro, les vannes de la soupape de commande (39) sont ouvertes par l'unité de processeur (40) de telle sorte que la pression dans la chambre de travail (34, 36) du piston de direction (24), qui est opposée au sens de mouvement du piston de direction (24), est réduite et que, immédiatement après, la pression dans la même chambre de travail (34, 36) est à nouveau augmentée.

3. Procédé selon la revendication 1 ou la revendication 2, **caractérisé par le fait que** lorsque la pression dans la chambre de travail (34, 36) du piston de direction (24), qui est opposée au sens de mouvement du piston de direction (24), est réduite, la pression dans l'autre chambre de travail (34, 36) est en même temps augmentée, et, ensuite, elle est réduite dans cette chambre de travail (34, 36) lorsque la pression dans la chambre de travail (34, 36) du piston de direction (24), qui est opposée au sens de mouvement du piston de direction (24), est à nouveau augmentée.

4. Procédé selon la revendication 1 ou la revendication 2, **caractérisé par le fait que** la pression dans la chambre de travail (34, 36) du piston de direction (24), qui est opposée au sens de mouvement du piston de direction (24), est réduite et, immédiatement après, la pression dans la même chambre de travail (34, 36) est à nouveau augmentée lorsque la durée de l'état où la vitesse angulaire de direction (Lv) est à peu près ou égale à zéro dure plus de 20 ms.

5. Procédé selon l'une quelconque des revendications 1 à 3, **caractérisé par le fait que** ledit capteur (42) détecte une butée de fin de course du piston de direction (24), et, puis, émet un signal correspondant indiquant que la vitesse angulaire de direction (Lv) est à preu près ou égale à zéro.
